# EUROPÄISCHE PATENTSCHRIFT

(11) **EP 2 529 981 B1**
(45) Veröffentlichungstag und Bekanntmachung des Hinweises auf die Patenterteilung: **16.09.2015**
(21) Anmeldenummer: 12004001.9
(22) Anmeldetag: 23.05.2012
(51) Int. Cl.: B60R 21/015

(54) **Verfahren und Anordnung zur Erkennung einer Sitzplatzbelegung**
Method and system for detecting whether a seat is occupied
Procédé et agencement destinés à la reconnaissance d'occupation d'une place assise

(30) Priorität: 31.05.2011 AT 7962011
(43) Veröffentlichungstag der Anmeldung: 05.12.2012
(73) Patentinhaber: Forschungsgesellschaft der FH Kärnten mbH, 9800 Spittal an der Drau, Kärnten (AT)
(72) Erfinder: Sterner, Hermann, 9500 Villach (AT); Haselberger, Matthias, 9300 St. Veit/Glan (AT); Bilho, Ingmar, 9500 Villach (AT)

(56) Entgegenhaltungen:
- WO-A1-2004/083004
- DE-A1-102004 032 473

## Beschreibung

Die Erfindung betrifft ein Verfahren sowie zugehörige, im Bedarfsfall mit geringem Aufwand auch nachrüstbare, Anordnungen zur zuverlässigen Detektion des Belegungszustandes eines Sitzplatzes, insbesonders für Massenverkehrsmittel oder Auditorien.

Der sensorgestützten Erkennung der Belegung von Sitzplätzen kommt eine stetig steigende Bedeutung zu. Anwendungsbereiche für derartige Systeme finden sich beispielsweise in i) der Kraftfahrzeug-Sicherheitstechnik z.B. zur Steuerung von (Beifahrer-)Airbags oder Sicherheitsgurt-Warnvorrichtungen, ii) der Personentransport-Logistik, beispielsweise zur Feststellung der Anzahl bzw. Lage freier Sitzplätze in Massenverkehrsmitteln wie Bussen, U-Bahnen oder Eisenbahnzügen, etc. oder iii) der Steuerung und Optimierung der Belegung von Auditorien mit freier Platzwahl, wie beispielsweise in Hörsälen, bei Vorträgen, sportlichen oder künstlerischen Darbietungen, etc.

Die technische Kernanforderung an derartige Sitzplatz-Belegungssensoren ist die Fähigkeit die Belegung eines Sitzplatzes durch eine Person möglichst unabhängig von deren Größe, Gewicht, Haltung, etc., zuverlässig zu erkennen. Dies inkludiert in vielen Fällen die Anforderung, die Belegung eines Sitzplatzes durch sonstige Objekte, wie Einkaufstaschen, Reisegepäck, Rucksäcke, etc. von einer Belegung durch eine Person zu unterscheiden. Zudem darf der Sensor nicht durch Umgebungseinflüsse in seiner Funktion gestört werden, und darf keine Störungen in anderen technischen Systemen bzw. Sensoren bewirken.

Zu diesen Grundanforderungen kommen in der Regel applikationsspezifische Spezifikationen denen ein Sensorsystem genügen muss. Bei Verwendung in Massenverkehrsmitteln oder Auditorien ist beispielsweise ein wesentlicher Aspekt, dass die Sensoren in existierende Verkehrsmittel bzw. Bestuhlungen in einfacher, kostengünstiger Art und Weise nachrüstbar sind. Dies erfordert unter anderem, dass damit keine wesentlichen baulichen Veränderungen verbunden sind die beispielsweise eine Änderungstypisierung erfordern würden.

Bedingt durch die hohe praktische Relevanz und die Vorteile derartiger Systeme sind diverse Ansätze zur Detektion der Sitzplatzbelegung vorbekannt, wobei der Schwerpunkt auf Systemen zur Ausrüstung von Personen-Kraftfahrzeugen liegt.

Die üblichste technische Lösung ist die Verwendung von Kraft- bzw. Drucksensoren in verschiedensten Ausführungsarten und Anordnungen, wie beispielsweise aus DE-A1 10045689, US 5896090, EP-A1 1002690 oder US-B1 6476514 bekannt. Die Sensoren sind dabei entweder in die Sitzfläche bzw. - polsterung oder die Sitzbefestigung integriert. Nachteilig dabei ist, neben einem substantiellen Aufwand für den Einbau und die Verkabelung, dass die Detektion der Sitzplatzbelegung rein über das Gewicht erfolgt. Eine leichte Person, z.B. ein Kind, ist damit unter Umständen nicht zu detektieren, bzw. ist eine Unterscheidung von einer anderen Last mit entsprechendem Gewicht nicht zuverlässig möglich.

Ähnliche Einschränkungen treffen auch auf eine Reihe optischer bzw. akustischer Sensoren zu, die anhand von Reflexionsmessungen, seltener Transmissionsmessungen, die Gegenwart eines Objektes auf einem Sitz detektieren. Zusätzlich zur hohen Komplexität und den Kosten derartiger Systeme, und der möglichen Wirkung von Ultraschallsensoren auf (Haus-)Tiere, können diese Sensoren wiederum nicht zuverlässig zwischen Personen und Objekten unterscheiden. Ansätze zur Integration künstlicher Intelligenz, wie aus US-B1 6445988 bekannt, können dieses Problem mildern, erhöhen aber Komplexität und Kosten der Sensorik zusätzlich.

Alternativ werden verschiedentlich, beispielsweise in DE-A1 10124915 oder DE-B3 102004050884, RF-Transmissions-Anordnungen vorgeschlagen. Als Detektionsprinzip dient dabei die Messung der Dämpfung einer hochfrequenten Funkwelle, typischerweise im GHz-Bereich, durch eine sich zwischen gegenüberliegenden Antennen befindliche Person. Analog dazu wird in DE-A1 102006044697 die damit verbundene Verstimmung der Frequenz gemessen und ausgewertet. Ebenfalls diesem grundlegenden Prinzip entsprechend wird in WO-A1 2004083004 und DE-A1 102004032473 vorgeschlagen, Reflektoren in die zu überwachenden Fahrzeugsitze zu integrieren, und die - vorzugsweise Reflektor-spezifisch codierten - Rück-Reflexionen eines 2.4 GHz-Signals zu einer Sende/Empfangseinheit auszuwerten. Primäres Messsignal ist dabei wiederum die Schwächung der empfangenen Funkwelle im Vergleich zum unbelegten Zustand durch einen zwischen der Sende/Empfangsantenne und den gegenüberliegenden Reflektoren befindlichen Körper.

Ausschlaggebend in sämtlichen derartigen Ausführungsformen ist die Wechselwirkung der Funkwellen mit dem Wasser im (menschlichen) Körper, was eine weitgehend zuverlässige Unterscheidung zu Taschen, etc. ermöglicht. Nachteilig sind i) der substantielle Aufwand zur Installation bzw. Verkabelung der erforderlichen, räumlich getrennten Sende- und Empfangsantennen bzw. Reflektorelemente und ii) die vergleichsweise hohen nötigen Sendeleistungen. Neben einem entsprechenden Energiebedarf und einer direkten Belastung mit vom Körper absorbierbarer elektromagnetischer Strahlung bedingt dies die Gefahr der Störung anderer, im gleichen Frequenzbereich arbeitender RF-Systeme.

Zudem besteht bei Einsatz derartiger Sensoren in Räumen mit multiplen Sitzplätzen bzw. Sensoren, wie Eisenbahnwaggons, Auditorien, etc., die Gefahr eines Übersprechens der Funksignale. Damit sind diese Lösungen als für die beabsichtigte Anwendung wenig geeignet einzustufen.

Aus JP-B2 3413479 ist eine Anordnung bekannt bei der kapazitive Sensoren zum Einsatz kommen sollen. Diese sind vom Prinzip her ebenfalls in der Lage zwischen (wasserhaltigen) Personen und nicht-wasserhaltigen Objekten zu unterscheiden, solange letztere nicht elektrisch leitfähig sind. Zudem sind sie i) vergleichsweise einfach aufgebaut und leicht in einen Sitzplatz zu integrieren, und ii) in der Wirkung auf den Nahbereich der Sitzfläche beschränkt, was ein Übersprechen zu anderen Sensoren verhindert. Allerdings werden die elektrischen Felder von metallischen Objekten im Wirkbereich des Sensors stark beeinflusst. In der betrieblichen Praxis sind solche Sensoren somit nur dann zuverlässig einsetzbar, wenn die Sitzplätze keine metallischen Stützstrukturen aufweisen und sich keine größeren Metallobjekte im Nahbereich des überwachten Sitzplatzes befinden.

Diese wesentliche Einschränkung trifft in analoger Weise auch auf eine Reihe anderer vorbekannter kapazitiver und/oder induktiver Sensoren zu. Insgesamt existiert somit bislang keine technisch zufriedenstellende Lösung zur praxistauglichen Realisierung einfach und kostengünstig nachrüstbarer Sensoren für die zuverlässige Erkennung des Belegungszustandes eines Sitzplatzes, insbesonders in Umgebungen mit multiplen Sitzplätzen.

Hier will die Erfindung Abhilfe schaffen.

Erfindungsgemäß wird vorgeschlagen, den Belegungszustand eines Sitzplatzes über die charakteristische Veränderung der elektromagnetischen Kopplung zwischen zwei benachbarten, in bzw. unter dem Sitz angeordneten Antennen durch Anwesenheit eines proximalen (menschlichen) Körpers zu detektieren. Dazu werden von einer Sendeantenne UHF-Funkwellen geeigneter Frequenz(en) emittiert, die von dem zu detektierenden (menschlichen) Körper reflektiert werden, und an zumindest einer benachbarten Empfangsantenne die Veränderung der eingekoppelten Energie gemessen und ausgewertet. Aus den Intensitäts - und/oder Phasenrelationen der emittierten und der empfangenen Funkwellen kann somit mit minimaler Sendeleistung der Belegungszustand des Sitzes zuverlässig ermittelt und in Folge an ein übergeordnetes Datenverarbeitungssystem, etc. übermittelt werden.

Die Funktion des erfindungsgemäßen Detektionsverfahrens im Einzelnen sowie die praktische Umsetzung in besonders vorteilhaften Anordnungen für verschiedene Anwendungsszenarien werden anhand nachfolgender Figuren erläutert.
Fig. 1 zeigt die prinzipielle Funktion des erfindungsgemäßen Detektionsverfahrens für eine exemplarische Anordnung mit einem unterhalb der Sitzebene eines Sitzplatzes angeordneten, aus einer Sende- und einer Empfangsantenne bestehenden Antennenpaar, und die durch die Präsenz eines Körpers auf dem Sitzplatz beeinflusste Kopplung zwischen diesen Antennen, in einer seitlichen 2-D Ansicht.
Fig. 2 zeigt vergleichend die typischen Frequenzabhängigkeiten der Kopplung zwischen in bzw. unter dem Sitz integrierte Sende- und Empfangsantenne für einen unbesetzten und einen bestimmungsgemäß besetzten Sitzplatz, in einer die Relationen der Leistung P und der Phase ϕ umfassenden Darstellung des Scattering-Parameters *S21* eines das Gesamtsystem repräsentierenden Vierpols.
Fig. 3 zeigt einen exemplarischen Aufbau eines erfindungsgemäßen Sensors mit Sende- und Empfangsantenne, Auswerteschaltung, Energieversorgung und Anschluss zur Datenübermittlung in einer coplanaren Anordnung auf einem gemeinsamen Träger, in einer Draufsicht von oben.
Fig. 4 zeigt eine mögliche Implementierung des erfindungsgemäßen Detektionsverfahrens mit zueinander geneigtem Antennenpaar, in einer frontalen 2-D Ansicht.
Fig. 5 zeigt eine weitere mögliche Ausführungsform zur Durchführung des erfindungsgemäßen Detektionsverfahrens mit multiplen, rund um eine gemeinsame Sendeantenne angeordneten, Empfangsantennen, in einer 3-D Ansicht.
Fig. 6 zeigt eine mögliche Implementierung des erfindungsgemäßen Detektionsverfahrens mit einem ersten erfindungsgemäßen Sensorsystem unterhalb der Sitzfläche des Sitzplatzes und einem zweiten erfindungsgemäßen Sensorsystem in bzw. hinter der Rückenlehne des Sitzplatzes, in einer 3-D Ansicht.

Verfahrensgemäß strahlt zur Detektion des Belegungszustands eines Sitzplatzes 1 eine Sendeantenne 21 elektromagnetische Wellen 211 ab.

Bei Nicht-Belegung des Sitzplatzes 1, oder bei Belegung mit einem elektrisch nicht leitfähigen Objekt, werden die elektromagnetischen Funkwellen 211 im Wesentlichen ungestört emittiert, wobei deren Intensität mit dem Quadrat der Entfernung abnimmt. In eine in geeignetem Abstand lateral zur Sendeantenne 21 versetzt angeordnete Empfangsantenne 22 wird dabei Energie eingekoppelt. Diese grundsätzlich bestehende Kopplung zwischen räumlich naheliegenden Antennen stellt somit die Bezugsbasis für die Auswertung der Wirkung einer Belegung des spezifischen Sitzplatzes mit einem Objekt dar. Durch regelmäßige Messung des Kopplungsverhaltens im nicht-belegten Zustand und Hinterlegen der so erhaltenen Kopplungsparameter als (aktualisierte) Referenzwerte können ein allfälliger Sensordrift bzw. verwandte, die Bezugsbasis beeinflussende Effekte kompensiert werden. Weiters kann dieser systeminhärent permanente Empfang auch zur kontinuierlichen Funktionsüberwachung des Sensors verwendet.

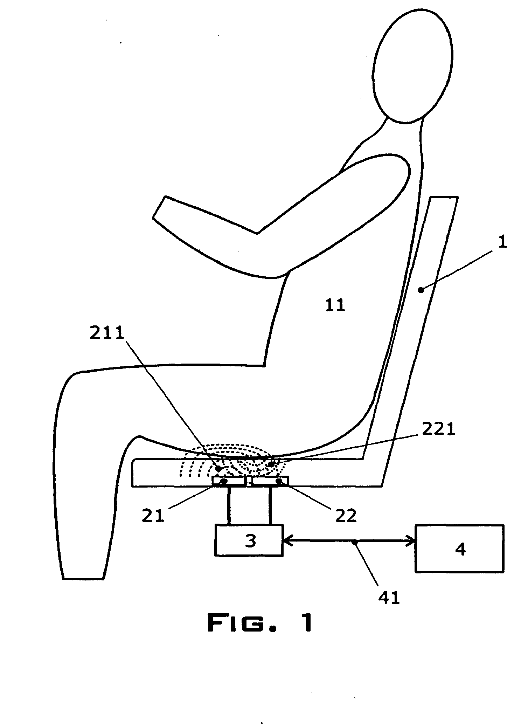

Befindet sich, wie in Fig. 1 dargestellt, ein elektrisch leitfähiger Körper, z.B. eine Person 11, im Wirkbereich der Antennen 21, 22 wird ein Teil der emittierten Funkwellen 211 von diesem Körper 11 reflektiert. Diese reflektierte Strahlung 221 wird teilweise von der lateral versetzt angeordneten Empfangsantenne 22 empfangen, was sich unmittelbar in einer intensivierten Kopplung zwischen den Antennen manifestiert. Die damit verbundene Signalveränderung am Ausgang der Empfangsantenne im Vergleich zum unbesetzten Zustand kann in Folge in geeigneter Art und Weise in einer Auswerteschaltung 3 ausgewertet und über eine - wahlweise kabelgebundene oder drahtlose - Signalstrecke 41 an ein übergeordnetes Datenverarbeitungs- oder Informationssystem 4 oder eine vergleichbare Einrichtung weitergeleitet werden.

Durch die erfindungsgemäß vorgeschlagene Verwendung einer dezidierten Nahfeld-Detektionsmethode und die geringen konstruktiv erforderlichen Abstände zwischen den Antennen 21, 22 und dem Objekt 11 von typischerweise ≤ 100 mm ist das erfindungsgemäße Verfahren in Lage, mit geringen Sendeleistungen von typischerweise 0 dBm die Sitzbelegung zuverlässig zu detektieren. Zusammen mit niedrigen Duty Cycles und Messung vorzugsweise bei möglichst effizient von der Körperoberfläche reflektierbaren Radiofrequenzen resultieren daraus minimale EM-Belastungen Größenordnungen unterhalb der zulässigen spezifischen Absorptionsraten (SAR).

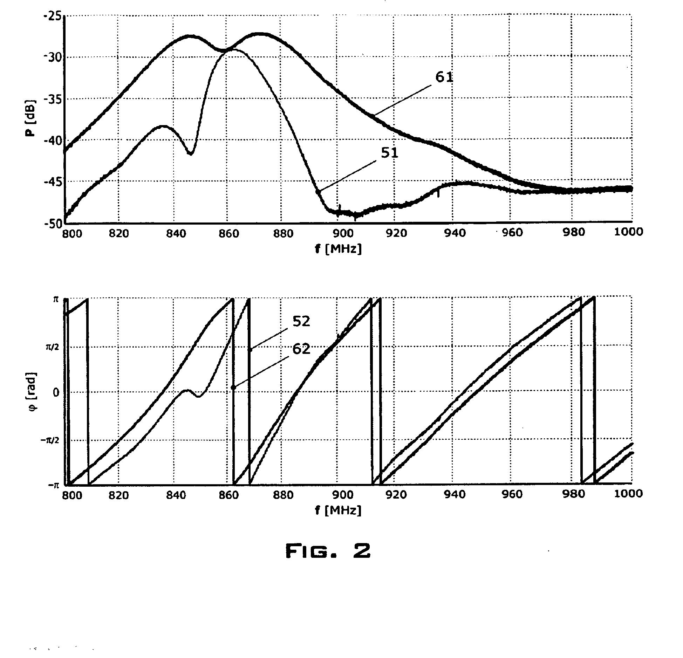

Die Funktion der erfindungsgemäßen Anordnung ist wesentlich von den Reflexionseigenschaften elektromagnetischer Wellen an verschiedenen Objekten, inklusive dem menschlichen Körper, abhängig. Wie aus der einschlägigen Fachliteratur hinlänglich bekannt (vgl. z.B. H. Pfützner, Angewandte Biophysik, Kapitel Elektrische Spektroskopie; Springer Verlag, 2011; oder H.A. Tritthart, Medizinische Physik und Biophysik, Schattauer Verlag, 2001), sind die Dispersions- und somit Reflexionseigenschaften von Gewebefrequenzabhängig; dies ist in Fig. 2 auszugsweise für den besonders relevanten Frequenzbereich 800 - 1.000 MHz dargestellt.

Für eine bestimmte, im gezeigten Beispiel Fig. 1 entsprechende, Anordnung von Sendeantenne 21 und Empfangsantenne 22 ergibt sich für den unbesetzten Sitzplatz eine bestimmte Leistungs-Relation 51 zwischen Sende- und Empfangskanal, und eine entsprechende Phasenrelation 52.

Bei Anwesenheit eines elektrisch leitfähigen Körpers verändern sich die frequenzabhängigen Kopplungseigenschaften zwischen Sende- und Empfangsantenne in charakteristischer Art und Weise.

Bei Belegung des Sitzplatzes mit elektrisch nicht-leitfähigen Objekten, z.B. Gepäckstücken, werden zum LeerZustand analoge Verläufe erhalten. Gleiches gilt für Verschmutzungen des Sitzplatzes, inklusive üblicher Feuchtigkeit. Befindet sich hingegen ein Objekt mit den elektrischen Eigenschaften eines menschlichen Körpers im Wirkbereich des Sensors steigt die in die Empfangsantenne 22 eingekoppelte Leistung, entsprechend Verlauf 61, begleitet von einer Veränderung der Signal-Phasenlage, Verlauf 62. Ein elektrisch hochgradig leitfähiges Objekt, beispielsweise ein Metallkoffer, würde eine noch deutlich stärkere Reflexion bewirken, was sich in einer wiederum signifikant unterschiedlichen Kopplung zwischen Sende- und Empfangsantenne äußern würde. Dies ermöglicht, neben der Detektion der Belegung eines Sitzplatzes auch eine zuverlässige Unterscheidung nach der Art der Belegung.

Im einfachsten, für die betriebliche Praxis häufig ausreichenden Fall erfolgt die Klassifikation nach dem Parameter P, d.h. der Relation zwischen emittierter Leistung und empfangener Leistung, bei einer festgelegten Frequenz. Bei Belegung des Sitzplatzes mit einem Menschen ist dieser Wert deutlich höher als im unbelegten (Referenz-)Zustand bzw. bei Belegung mit einem elektrisch nicht-leitfähigen Objekt, aber deutlich niedriger z.B. bei Belegung des Sitzplatzes mit metallischen Objekten. Je nach Anwendung können hier applikationsspezifisch Anwendungsgrenzen gezogen werden, die beispielsweise den Einfluss einer dicken Winterjacke, oder von Münzen in einer Gesäßtasche in Betracht ziehen.

Analog dazu kann die Phasenlage ϕ ausgewertet werden, oder es können P und ϕ korreliert ausgewertet werden. Bei höheren Anforderungen an die Zuverlässigkeit und/oder die Differenzierung zwischen unterschiedlichen Objekten ist es zudem möglich, bei zwei oder mehr Frequenzen zu messen, und neben den Absolut- auch Relativwerte und/oder die FrequenzVerläufe von P und/oder ϕ zur Auswertung heranzuziehen.

Insgesamt ist das erfindungsgemäße Verfahren insbesonders für den Betrieb bei UHF-Frequenzen im Bereich 700 - 970 MHz geeignet. Bei höheren Frequenzen dominiert die Absorption der elektromagnetischen Wellen im menschlichen Körper, wodurch mit den erfindungsgemäßen Anordnungen kein signifikanter Unterschied mehr zwischen belegtem und unbelegtem Zustand erfassbar ist. Zu niedrigeren Frequenzen hin stellen i) die sinkende Kopplungsstärke, und damit verbunden die geringere Signalstärke am Ausgang der Empfangsantenne, und ii) die für diesen Frequenzbereich erforderlichen signifikant größeren Bauformen der verwendeten Antennen die praktisch wesentlichsten limitierenden Faktoren dar.

Unter Berücksichtigung der rechtlichen Vorgaben werden für das erfindungsgemäße Verfahren in der ITU Region 1 (Europa, etc.) somit besonders vorzugsweise Frequenzen im Bereich des SRD 868 MHz-Bands, in der ITU Region 2 (Nord- und Südamerika) besonders vorzugsweise Frequenzen im Bereich des ISM 915 MHz-Bands verwendet.

Die Messung erfolgt im Normalfall intermittierend in bestimmten, anwendungsabhängig wählbaren Zeitintervallen, typischerweise im Bereich einiger Sekunden bis zu mehreren Minuten. Im Vergleich dazu liegen die typischen Messzeiten in der Größenordnung einiger Millisekunden, woraus relative Einschaltdauern ("Duty Cycles") von üblicherweise ≤ 1‰ resultieren.

Während der eigentlichen Messung sind Sende- und Empfangsantenne gleichzeitig aktiv. Optional ist es möglich, die Empfangsantenne 22 zudem vor und/oder nach der eigentlichen Messung zu aktivieren, um Hintergrund bzw. Störsignale zu detektieren. Dies ermöglicht, die Messung(en) entsprechend zu korrigieren, bzw. bei zu hohem Störsignalpegel die Messung zeitlich solange zu verschieben, bis ein ausreichend störungsarmes Messfenster zur Verfügung steht.

Ein weiterer für den Praxiseinsatz essentieller Vorteil des erfindungsgemäßen Verfahrens ist, dass - anders als beispielsweise bei kapazitiven Systemen - das Abstrahl- bzw. Empfangsverhalten der Antennen gezielt auf die Anwendung (Sitzkonstruktion, Platzbedarf, Betriebsfrequenzen, etc.) hin optimiert werden kann.

Eine erste solche Anordnung ist für den Einsatz in bzw. unter Schalensitzen ausgelegt, wie sie häufig in Nahverkehrszügen, Auditorien, etc. zum Einsatz kommen. Dabei beträgt der Abstand zwischen Sitzschalenunterseite, wo in vielen Fällen der erfindungsgemäße Sensor vorzugsweise angeordnet wird, und der Sitzfläche typischerweise nur einige Zentimeter.

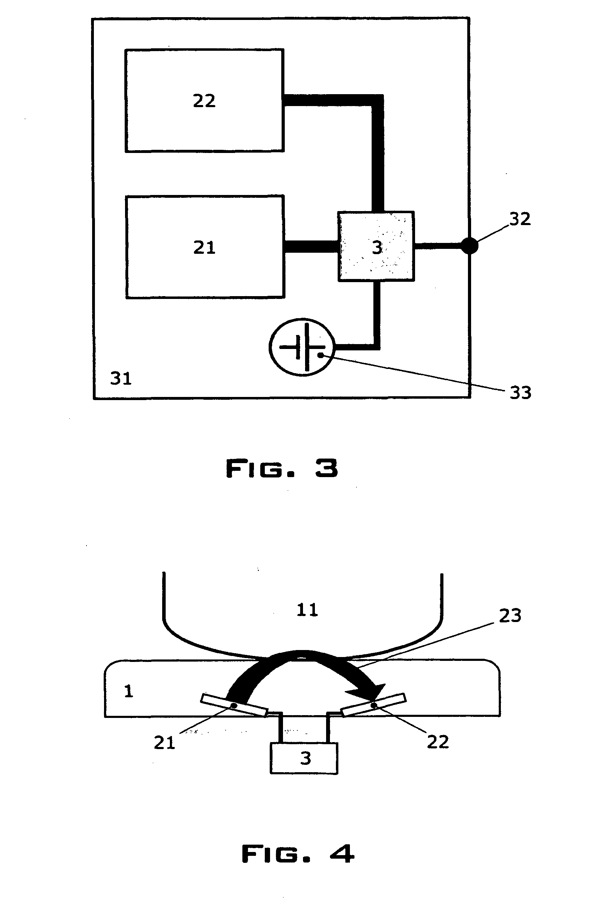

Der geringe Abstand zum zu detektierenden Objekt 11 ermöglicht, die Sensoren in kompakter Bauform mit coplanarem Antennenpaar 21, 22 auszuführen. Zur Minimierung des Fertigungs- und Installationsaufwands ist es hier besonders vorteilhaft Sendeantenne 21, Empfangsantenne 22, Steuer- und Auswertelektronik 3 und den Anschluss 32 für die Datenübertragung auf einem gemeinsamen Träger 31 anzuordnen, wie in Fig. 3 exemplarisch dargestellt. Die Antennen werden dabei vorzugsweise als Patch-Antennen ausgeführt, die in für die Betriebsfrequenz passender Größe und geeignetem Abstand zueinander auf dem Träger 31 angeordnet sind. Als Trägermaterialien kommen dabei insbesonders klassische Leiterplatten ("Printed Circuit Boards") oder flexible Flexprints zur Anwendung.

Besonders vorteilhaft an dieser Anordnung ist, dass der Sensor als ein Objekt problemlos, ohne Verkabelung oder Eingriffe in die Struktur oder Befestigung des Sitzplatzes, an einer geeigneten Stelle innerhalb oder unterhalb eines zu überwachenden Sitzplatzes installiert werden kann. Optional ist es zudem möglich, eine lokale Energiequelle 33, üblicherweise wahlweise eine Primärzelle ("Batterie") oder Sekundärzelle ("Akkumulator"), zu integrieren. Kombiniert mit einer drahtlosen mono- oder bi-direktionalen Datenübertragung 41 zwischen dem Sensor und der übergeordneten Einheit 4 ermöglicht dies, die Sensoren ohne Verkabelung oder sonstige bauliche Änderungen, im Bedarfsfall auch nachträglich, zu installieren.

Eine zweite beispielhafte Anordnung, wie in Fig. 4 gezeigt, ist insbesonders für Anwendungen mit größerem Abstand zwischen den Sensorantennen 21, 22 und der Sitzfläche ausgelegt, wie sie beispielsweise in gut gepolsterten Komfort-Sitzplätzen in Fernverkehrs-Zügen oder in Personenkraftwagen verwendet werden. Hier ist es vorteilhaft, Sendeantenne 21 und Empfangsantenne 22 so zueinander geneigt anzuordnen, dass sich das zu detektierende Objekt 11 im Überlappungsbereich der Antennenausrichtungen und somit im unmittelbaren Wirkbereich der resultierenden Antennenkopplung 23 befindet.

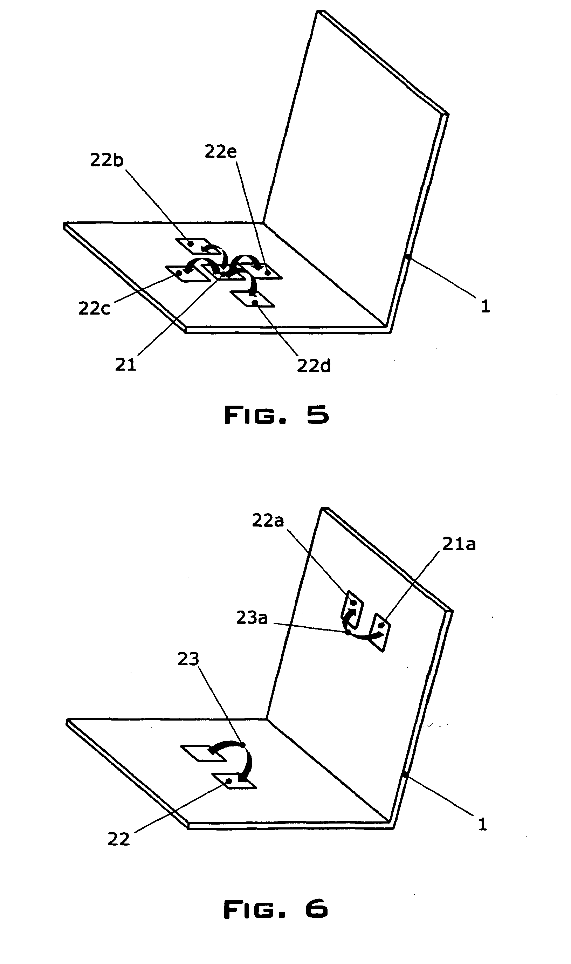

In einer weiteren vorteilhaften Anordnung werden einer Sendeantenne 21 zwei oder mehr Empfangsantennen zugeordnet, wie in Fig. 5 beispielhaft für eine Anordnung mit vier Empfangsantennen 22b, 22c, 22d und 22e dargestellt. Dies bewirkt eine Erhöhung der Sensitivität und der Zuverlässigkeit der Detektion der Belegung eines Sitzplatzes. Optional kann damit weiters auch die ungefähre Sitzposition einer Person auf dem jeweiligen Sitzplatz ermittelt werden.

In weiterer Folge sind eine Vielzahl spezifischer Optimierungen, beispielsweise bezüglich Größe, Form und Position der Feedpoints der Antennen ebenso wie deren optimale dreidimensionale Anordnung relativ zueinander, zum zu detektierenden Objekt und zur Umgebung denkbar und im einzelnen Anwendungsfall erforderlich. Diese Optimierung entspricht dem einschlägigen Stand der Technik und kann routinemäßig, beispielsweise mit Hilfe entsprechender computergestützter Simulationswerkzeuge, erfolgen ohne den Umfang des beanspruchten Schutzes zu überschreiten.

Die Beschränkung des Wirkbereichs der erfindungsgemäßen Sensoren auf das Nahfeld ermöglicht, direkt benachbarte Sitzplätze ohne Wechselwirkungen oder sonstigen Störungen mit baugleichen Sensoren zu überwachen.

Ebenso ist es somit möglich, mehrere erfindungsgemäße Sensoren voneinander unabhängig in einen Sitzplatz 1 zu integrieren, wie in Fig. 6 für eine bespielhafte Ausführungsform mit einem ersten Sensorsystem 21, 22 unterhalb der Sitzfläche und einem zweiten Sensorsystem 21a, 22a in der Rückenlehne des Sitzes 1 dargestellt, ohne dass es zu einem Übersprechen zwischen der Kopplung 23 des ersten Sensorsystems und der Kopplung 23a des zweiten Sensorsystems kommt. In der Praxis ermöglicht dies beispielsweise eine Belegung eines Sitzplatzes durch eine Person von einer Belegung durch ein Tier, z.B. einen Hund zu unterscheiden, oder eine Belegung von zwei oder mehreren Sitzplätzen durch eine entsprechende Anzahl sitzender Personen von einer Belegung durch eine einzelne liegende Person zu differenzieren.

Zusammenfassend hat das erfindungsgemäße Verfahren somit im Vergleich zu vorbekannten Messprinzipien eine Reihe praktischer wie technischer Vorteile, die es als besonders vorteilhaft für die geplante Anwendung als Detektionssystem für die Sitzplatzbelegung insbesonders in Umgebungen mit multiplen zu überwachenden Sitzplätzen auszeichnet:

Das Verfahren erlaubt eine selektive Detektion der Belegung eines Sitzes durch eine Person, inklusive einer Unterscheidung von elektrisch nicht-leitfähigen wie auch von metallischen Objekten. Ebenso ist eine kontinuierliche Funktionsüberwachung des Sensors möglich.

Das Messsystem ist frei von beweglichen Teilen und weitestgehend unempfindlich gegenüber Schmutz und sonstigen Umwelteinflüssen.

Die abgestrahlte Sendeleistung wie auch die vom Körper absorbierte Leistung sind deutlich geringer als bei vergleichbaren Verfahren und können auf einfache Art und Weise gezielt auf den Anwendungsfall bzw. die Betriebsumgebung des Sensors hin optimiert werden. Neben einer minimierten Belastung mit elektromagnetischer Strahlung resultiert daraus die Möglichkeit, die Sensoren autonom mit Hilfe lokaler Energiequellen längerfristig zu versorgen.

In Kombination einer drahtlosen Informationsübertragung des ermittelten Belegungszustands ist es möglich, Sitzplätze ohne bauliche Änderungen (Verkabelung, etc.) und dadurch ggf. erforderliche Änderungstypisierungen mit den erfindungsgemäßen Sensorsystemen nachzurüsten.

## Patentansprüche

1. Verfahren zur Detektion des Belegungszustandes eines Sitzplatzes (1), **dadurch gekennzeichnet, dass** die Belegung des Sitzplatzes (1) durch Erfassung der, durch die Präsenz eines Körpers (11) im Nahbereich des Sitzplatzes (1) hervorgerufenen, Veränderung(en) des elektromagnetischen Kopplungsverhaltens zwischen einer in bzw. unter der Sitzfläche des Sitzplatzes (1) integrierten, bei einer oder mehreren Frequenzen innerhalb des Frequenzbereichs 700 MHz bis 970 MHz Funkwellen emittierenden Sendeantenne (21) und zumindest einer diese Funkwellen empfangenden Empfangsantenne (22) detektiert wird, wobei die Veränderung (en) des elektromagnetischen Kopplungsverhaltens zwischen Sendeantenne (21) und Empfangsantenne (22) durch Reflektion eines Teils der emittierten Funkwellen (211) durch den zu detektierenden Körper (11) bewirkt wird, und Sende- und Empfangsantenne(n) (21, 22) im Wesentlichen in der selben Ebene in bzw. unter der Sitzfläche des Sitzplatzes (1) lateral benachbart angeordnet sind.

2. Verfahren zur Detektion des Belegungszustandes eines Sitzplatzes (1) gemäß Anspruch 1, **dadurch gekennzeichnet, dass** als Parameter für das elektromagnetische Kopplungsverhalten das Verhältnis der Signalintensität am Ausgang der Empfangsantenne(n) (22) zur Signalintensität am Eingang der zugehörigen Sendeantenne (21) oder/und die Phasenverschiebung zwischen emittierten und empfangenen Funkwellen ermittelt werden.

3. Verfahren zur Detektion des Belegungszustandes eines Sitzplatzes (1) gemäß Anspruch 1 oder 2, **dadurch gekennzeichnet, dass** das/die Kopplungsverhalten bei einer oder mehreren diskreten Frequenz(en) ermittelt wird/werden, und die daraus ermittelten Veränderungen der Kopplungsverhalten relativ zum Kopplungsverhalten im nicht belegten Zustand das Maß für die Ermittlung des Belegungszustands darstellt.

4. Verfahren zur Detektion des Belegungszustandes eines Sitzplatzes (1) gemäß Anspruch 1 oder 2, **dadurch gekennzeichnet, dass** das Kopplungsverhalten kontinuierlich über zumindest einen Teilbereich des UHF-Frequenzbereichs 700 - 970 MHz ermittelt wird, und die Veränderungen der ermittelten frequenzabhängigen Verläufe der Kopplungsparameter (61, 62) relativ zum Kopplungsverhalten im nicht belegten Zustand (51, 52) die Maße für die Ermittlung des Belegungszustands darstellen.

5. Verfahren zur Detektion des Belegungszustandes eines Sitzplatzes (1) gemäß einem der Ansprüche 1 bis 4, **dadurch gekennzeichnet, dass** das als Referenz fungierende Kopplungsverhalten im nicht belegten Zustand in regelmäßigen Abständen gemessen und als aktualisierte Bezugsgröße(n) im Sensor oder/und einem übergeordneten Kontrollsystem (4) für die Auswertung hinterlegt wird, und dadurch Sensordrifts und/oder vergleichbare, die Sensitivität und Zuverlässigkeit des Verfahrens beeinflussende Effekte kompensiert werden.

6. Verfahren zur Detektion des Belegungszustandes eines Sitzplatzes (1) gemäß Ansprüchen 1 bis 5, **dadurch gekennzeichnet, dass** die Sendeleistung der Sendeantenne (21) in der Größenordnung 0 dBm beträgt.

7. Verfahren zur Detektion des Belegungszustandes eines Sitzplatzes (1) gemäß einem der Ansprüche 1 bis 6, **dadurch gekennzeichnet, dass** die Messung, vorzugsweise in anwendungsabhängig frei wählbaren Zeitintervallen, intermittierend erfolgt.

8. Verfahren zur Detektion des Belegungszustandes eines Sitzplatzes (1) gemäß Anspruch 7, **dadurch gekennzeichnet, dass** vor Beginn der Emission von Funkwellen durch die Sendeantenne (21) die Empfangsantenne (22) den elektromagnetischen Hintergrund aufzeichnet und eine Auswerteanordnung (3) daraus ermittelt, ob i) eine ungestörte Messung möglich ist, ii) eine Hintergrundkompensation erforderlich und möglich ist, und deren Durchführung anhand der aufgezeichneten Hintergrund-Daten veranlasst wird, oder iii) die Messung solange zeitlich verschoben wird, bis der Hintergrund ausreichend niedrig ist um eine zuverlässige Messung des Kopplungsverhaltens bei der oder den gewählten Betriebsfrequenz(en) zu gewährleisten.

9. Anordnung zur Durchführung des Verfahrens zur Detektion des Belegungszustandes eines Sitzplatzes (1) gemäß Ansprüchen 1 bis 8, **dadurch gekennzeichnet, dass** die in bzw. unter der Sitzfläche des Sitzplatzes (1) integrierte Sendeantenne (21) und die, zumindest eine, Empfangsantenne (22) co-planar angeordnet sind, vorzugsweise auf einem geeigneten gemeinsamen Träger (31), beispielsweise einer Leiterplatte.

10. Anordnung zur Durchführung des Verfahrens zur Detektion des Belegungszustandes eines Sitzplatzes (1) gemäß einem der Ansprüche 1 bis 8, **dadurch gekennzeichnet, dass** in bzw. unter der Sitzfläche des Sitzplatzes (1) integrierte die Sendeantenne (21) und die, zumindest eine, Empfangsantenne (22) im Wesentlichen in der selben Ebene in bzw. unter der Sitzfläche des Sitzplatzes (1) so zueinander geneigt angeordnet sind, dass sich das zu detektierende Objekt bzw. Person (11) im Überlappungsbereich (23) der Antennenausrichtungen befindet.

11. Anordnung gemäß Anspruch 9 oder 10, **dadurch gekennzeichnet, dass** einer Sendeantenne (21) mehrere, in verschiedenen lateralen Richtungen versetzt angeordnete Empfangsantennen (22b, 22c, 22d, 22e) zugeordnet sind.

12. Anordnung gemäß einem der Ansprüche 9 bis 11, **dadurch gekennzeichnet, dass** eine Steuer- und Auswerteelektronik (3) zur autonomen Erzeugung der Sendesignale und Erfassung und Auswertung der Messsignale, eine lokale Energiequelle (33) und/oder eine Kommunikationsschnittstelle (32) mit integriert sind.

13. Anordnung zur Durchführung des Verfahrens zur Detektion des Belegungszustandes eines Sitzplatzes (1) gemäß einem der Ansprüche 9 bis 12, **dadurch gekennzeichnet, dass** je zu überwachendem Sitzplatz (1), ggf. zusätzlich zu und unabhängig von einem oder mehreren erfindungsgemäßen Sensoranordnungen (21, 22) im Sitzbereich des Sitzplatzes (1), zumindest eine erfindungsgemäße Sensoranordnung (21a, 22a) in bzw. hinter der Rückenlehne des Sitzplatzes (1) integriert ist.

14. Verfahren zur Detektion des Belegungszustandes eines oder mehrerer Sitzplätze (1), insbesonders des Beifahrersitzes, in Personen-Kraftfahrzeugen, **gekennzeichnet durch** jeweils zumindest eine Sensoranordnung gemäß den Merkmalen zumindest eines der Ansprüche 9 bis 13 je zu überwachendem Sitzplatz (1).

15. Verfahren zur voneinander unabhängigen Detektion der Belegungszustände multipler Sitzplätze (1) in Massenverkehrsmitteln, wie insbesonders Eisenbahnzügen, U-Bahn-Zügen oder Straßenbahnzügen oder Bussen, **gekennzeichnet durch** jeweils zumindest eine Sensoranordnung gemäß den Merkmalen zumindest eines der Ansprüche 9 bis 13 je zu überwachendem Sitzplatz (1).

## Claims

1. A method for the detection of the occupancy status of a seat (1), **characterised in that** the occupancy of the seat (1) is detected through recording the change(s) in the electromagnetic coupling behaviour between a transmitting antenna (21) integrated within or under the seating surface of the seat (1), and emitting one or more radio waves within the frequency range of 700 MHz to 970 MHz, and a receiving antennae (22) receiving at least one of these radio waves, said change(s) caused by the presence of a body (11) in the vicinity of the seat (1), wherein the change(s) in the electromagnetic coupling behaviour between transmitting antenna (21) and receiving antenna (22) is/are caused through reflection of part of the emitted radio waves (211) by the body (11) to be detected, and with the transmitting and receiving antenna/antennae (21, 22) arranged laterally adjacent to one another substantially in the same plane within or under the seating surface of the seat (1).

2. A method for the detection of the occupancy status of a seat (1), according to claim 1, **characterised in that**, as a parameter for the electromagnetic coupling behaviour, the ratio of the signal intensity at the output of the receiving antenna/antennae (22) to the signal intensity at the input of the associated transmitting antennae (21) or/and the phase shift between the emitted and received radio waves is determined.

3. A method for the detection of the occupancy status of a seat (1) according to claim 1 or 2, **characterised in that** the coupling behaviour is determined with one or more discrete frequencies, and the resultant detected changes in the coupling behaviour relative to the coupling behaviour in the non-occupied state constitutes the measure for the determination of the occupancy status.

4. A method for the detection of the occupancy status of a seat (1) according to claim 1 or 2, **characterised in that** the coupling behaviour is continuously detected over at least part of the UHF frequency range 700 - 970 MHz, and the changes in the detected frequency-dependent progressions of the coupling parameters (61, 62) relative to the coupling behaviour in the non-occupied state (51, 52) constitutes the measure for the determination of the occupancy status.

5. A method for the detection of the occupancy status of a seat (1) according to claims 1 to 4, **characterised in that** the coupling behaviour in the non-occupied state serving as the reference is measured at regular intervals and is stored in the sensor or/and an supraordinate control system (4) as the updated reference value(s) for the analysis, and sensor drifts and/or comparable effects that influence the sensitivity and reliability of the methods are thereby corrected.

6. A method for the detection of the occupancy status of a seat (1) according to claims 1 to 5, **characterised in that** the transmission power of the transmitting antenna (21) lies in the magnitude of 0 dBm.

7. A method for the detection of the occupancy status of a seat (1) according to claims 1 to 6, **characterised in that** the measurement takes place intermittently preferably at freely selectable interval depending on the application.

8. A method for the detection of the occupancy status of a seat (1) according to claim 7, **characterised in that**, prior to the commencement of the emission of radio waves by the transmitting antenna (21), the receiving antenna (22) registers the electromagnetic background and from that determines an arrangement for evaluating (3) whether i) an uninterrupted measurement is possible, ii) background correction is necessary and possible and if it can be performed on the basis of the registered background data, or iii) the measurement will be postponed until such time that a reliable measurement of the coupling behaviour can be guaranteed under the selected operating frequency/frequencies.

9. Arrangement for carrying out the method for the detection of the occupancy status of a seat (1) in accordance with claims 1 to 8, **characterised in that** the transmitting antenna (21) integrated into or under the seat (1) and that at least one receiving antenna (22) are arranged in an co-planer arrangement, preferably on one suitable shared carrier (31), such as a circuit board.

10. Arrangement for carrying out the method for the detection of the occupancy status of a seat (1) in accordance with claims 1 to 8, **characterised in that** the transmitting antenna (21) integrated into or under the seat (1) and the (at least one) receiving antennae (22) are arranged substantially on the same plane within or under the seating surface of the seat (1) inclined towards one another in such a way that object or person (11) to be detected is located within the overlap (23) of the antenna alignments.

11. Arrangement in accordance with claim 9 or 10, **characterised in that** a transmitting antenna (21) is aligned towards several receiving antennae (22b, 22c, 22d, 22e) arranged offset in various lateral directions.

12. Arrangement in accordance with one of the claims 9 to 11, **characterised in that** an electronic control and evaluation unit (3) is also integrated for the autonomous generation of the transmission signals, for the recording and evaluation of measured signals along with a local power source (33) and/or a communications interface (32).

13. Arrangement for carrying out the method for the detection of the occupancy status of a seat (1) according to one of the claims 9 to 12, **characterised in that** each monitored seat (1), possibly in addition to and independent from one or more of the sensor arrangements according to the invention (21, 22) within the seating surface of the seat (1), with at least one sensor arrangement according to the invention (21a, 22a) integrated into or behind the backrest of the seat (1).

14. Method for the detection of the occupancy status of one or more seats (1), especially the front passenger seat in passenger vehicles, characterised through at least one sensor arrangement in accordance with the characteristics of at least one of the claims 1 to 13, for each monitored seat (1).

15. Method for the independent detection of multiple seats (1) in mass transport systems, particularly including railway trains, metro trains, trams or buses, characterised through at least one sensor arrangement in accordance with the characteristics of at least one of the claims 1 to 13, for each monitored seat (1).

## Revendications

1. Procédé de détection de l'état d'occupation d'un siège (1), **caractérisé en ce que** l'occupation du siège (1) est détectée par enregistrement de la(des) modification(s), provoquée(s) par la présence d'un corps (11) à proximité du siège (1), des réactions de couplage électromagnétiques entre une antenne émettrice (21) intégrée dans ou sous la surface d'assise du siège (1) à une ou plusieurs fréquences, dans le cas d'une antenne émettrice (21) émettant dans la plage de fréquence de 700 MHz à 970 MHz, et au moins une antenne réceptrice (22) recevant ces ondes radio, la(des) modification(s) de la réaction de couplage électromagnétique entre l'antenne émettrice (21) et l'antenne réceptrice (22) étant provoquée(s) par réflexion d'une partie des ondes radio émises (211) par le corps à détecter (11) et l'antenne(les antennes) émettrice(s) et réceptrice(s) (21, 22) étant disposée(s) latéralement voisines l'une de l'autre sensiblement dans le même plan dans ou sous la surface d'assise du siège (1).

2. Procédé de détection de l'état d'occupation d'un siège (1) selon la revendication 1, **caractérisé en ce qu'**on détermine comme paramètres pour la réaction de couplage électromagnétique le ratio entre l'intensité de signal à la sortie de l'antenne(des antennes) réceptrice(s) (22) et l'intensité de signal à l'entrée de l'antenne émettrice correspondante (21) et/ou le déphasage entre les ondes radio émises et reçues.

3. Procédé de détection de l'état d'occupation d'un siège (1) selon la revendication 1 ou 2, **caractérisé en ce que** la(les) réaction(s) de couplage est(sont) déterminée(s) à une ou plusieurs fréquences discrètes et que les modifications déterminées à partir de là des réactions de couplage par rapport aux réactions de couplage en état non occupé constituent l'indicateur pour la détermination de l'état d'occupation.

4. Procédé de détection de l'état d'occupation d'un siège (1) selon la revendication 1 ou 2, **caractérisé en ce que** la réaction de couplage est déterminée en continu ou du moins sur une zone partielle de la plage de fréquence UHF de 700 à 970 MHz et que les modifications des cycles liés à la fréquence des paramètres de couplage (61, 62) par rapport aux réactions de couplage en état non occupé (51, 52) constituent les indicateurs pour la détermination de l'état d'occupation

5. Procédé de détection de l'état d'occupation d'un siège (1) selon une des revendications 1 à 4, **caractérisé en ce que** la réaction de couplage servant de référence en état non occupé est mesurée à intervalles réguliers et enregistrée comme valeur(s) de référence actualisée(s) dans le capteur ou/et un système de contrôle de niveau supérieur(4) pour exploitation et qu'ainsi les dérives du capteur et/ou les effets comparables affectant la sensibilité et la fiabilité du procédé sont compensés.

6. Procédé de détection de l'état d'occupation d'un siège (1) selon les revendications 1 à 5, **caractérisé en ce que** la puissance émettrice de l'antenne émettrice (21) est de l'ordre de 0 dBm.

7. Procédé de détection de l'état d'occupation d'un siège (1) selon une des revendications 1 à 6, **caractérisé en ce que** la mesure a lieu par intermittence, de préférence à des intervalles pouvant être choisis à volonté en fonction de l'application.

8. Procédé de détection de l'état d'occupation d'un siège (1) selon la revendication 7, **caractérisé en ce que**, avant le début de l'émission d'ondes radio par l'antenne émettrice (21), l'antenne réceptrice (22) enregistre l'arrière-plan électromagnétique et qu'un dispositif d'exploitation détermine à partir de là (3) si i) une mesure non perturbée est possible, ii) une compensation d'arrière-plan est nécessaire et possible, et sa réalisation est lancée en partant des données d'arrière-plan enregistrées, ou iii) la mesure est retardée chronologiquement jusqu'à ce que l'arrière-plan soit suffisamment faible pour garantir une mesure fiable de la réaction de couplage à la ou aux fréquences sélectionnées.

9. Dispositif de réalisation du procédé de détection de l'état d'occupation d'un siège (1) selon les revendications 1 à 8, **caractérisé en ce que** l'antenne émettrice (21) intégrée dans ou sous la surface d'assise du siège (1) et l'au moins une antenne réceptrice (22) sont disposées de manière coplanaire, de préférence sur un support commun (31), par exemple un circuit imprimé.

10. Dispositif de réalisation du procédé de détection de l'état d'occupation d'un siège (1) selon une des revendications1 à 8, **caractérisé en ce que** l'antenne émettrice (21) intégrée dans ou sous la surface d'assise du siège (1) et l'au moins une antenne réceptrice (22) sont disposées (1) inclinées sensiblement dans le même plan l'une par rapport à l'autre dans ou sous la surface d'assise du siège (11) de manière à ce que l'objet ou la personne à détecter (11) se trouve dans la zone de chevauchement (23) des orientations de l'antenne.

11. Dispositif selon la revendication 9 ou 10, **caractérisé en ce que** plusieurs antennes réceptrices (22b, 22c, 22d, 22e) disposées décalées dans différents sens latéraux sont associées à une antenne émettrice (21).

12. Dispositif selon une des revendications 9 à 11, **caractérisé en ce qu'**un système électronique de commande et d'exploitation (3) permettant la génération autonome des signaux d'émission et la détection et l'exploitation des signaux de mesure, une source d'énergie locale (33) et/ou une interface de communication (32) sont intégrés conjointement.

13. Dispositif de réalisation du procédé de détection de l'état d'occupation d'un siège (1) selon une des revendications 9 à 12, **caractérisé en ce que**, par siège à surveiller (1), le cas échéant en complément et indépendamment d'un ou plusieurs dispositifs de détection selon l'invention (21, 22) situés dans la zone d'assise du siège (1), au moins un dispositif de détection selon l'invention (21a, 22a) est intégré dans ou sous le dossier du siège (1).

14. Procédé de détection de l'état d'occupation d'une ou plusieurs places assises (1), en particulier du siège du copilote dans les véhicules automobiles personnels, **caractérisé par** respectivement au moins un dispositif de détection selon une des revendications 1 à 13 par siège à surveiller (1).

15. Procédé de détection indépendamment les unes des autres des états d'occupation de places assises multiples (1) dans les moyens de transport de masse, comme en particulier les trains, métros ou tramways ou bus, **caractérisé par** respectivement au moins un dispositif de détection selon les caractéristiques d'au moins une des revendications 1 à 13 par siège à surveiller (1).
